# EUROPEAN PATENT APPLICATION

(11) **EP 2 230 632 A1**
(43) Date of publication of application: **22.09.2010**
(21) Application number: 09010984.4
(22) Date of filing: 27.08.2009
(51) Int. Cl.: G06K 19/07

(54) **Mobile electronic device and control method of mobile electronic device**

(30) Priority: 18.03.2009 JP 2009067009
(71) Applicant: Kabushiki Kaisha Toshiba, Minato-ku, Tokyo 105-8001 (JP)
(72) Inventor: Tomoeda, Yuuki, Minato-ku Tokyo 105-8001 (JP)
(74) Representative: HOFFMANN EITLE

(57) **Abstract**

A mobile electronic device (2) that transmits and receives data with respect to an external device by wireless communication receives electric power from the external device (1) by wireless and supplies electric power to respective portions of the mobile electronic device (2). The mobile electronic device (2) includes a transmission/reception unit (24) configured to transmit and receive data with respect to the external device (1) and a plurality of signal processor units (243) configured to subject data transmitted and received by the transmission/reception unit to signal processes according to different communication protocols. The mobile electronic device (2) determines a communication protocol based on data received by the transmission/reception unit (24), selects one of the plurality of signal processor units (243) based on the determination result, and performs a control operation to cause the transmission/reception unit (24) to transmit and receive data by use of the selected signal processor unit (243).

## Description

This invention relates to a mobile electronic device that performs a process in response to a command from the external device, for example, and a control method of the mobile electronic device.

Generally, an IC card used as a mobile electronic device has a card-like main body formed of plastic or the like and an IC module embedded in the main body. The IC module has an IC chip. The IC chip has a nonvolatile memory such as a flash ROM or an electrically erasable programmable read-only memory (EEPROM) capable of holding data even if no electric power is supplied thereto and a CPU that performs various operations.

For example, the IC card is an IC card in conformity to ISO/IEC7816-1 part 1, 2. The IC card is excellent in portability and can be used for communication with the external device and perform complicated operation processes. Further, it is predicted that the IC card can store information with top secrecy and be used for a security system or online electronic commerce since it is difficult to forge the IC card.

For example, an IC card described in Jpn. Pat. Appln. KOKAI Publication No. 2000-123121 that is a patent document of Japanese Application can transmit and receive data by wireless communication.

The above contactless IC card has an IC chip and antenna. The contactless IC card is operated by causing the antenna of the card to generate electricity by electromagnetic induction in response to a magnetic field generated from a reader/writer.

The contactless IC card demodulates and modulates data transmitted and received via the antenna. The frequency, modulation system and encoding system of the contactless IC card and a contactless IC reader/writer are specified according to a preset communication protocol.

For example, as the communication protocol, Type A and Type B specified according to ISO/IEC14443, Type C specified according to ISO/IEC18092 and the like are provided. For example, an IC reader/writer described in Jpn. Pat. Appln. KOKAI Publication No. 2001-312699 that is a patent document of Japanese Application can cope with a plurality of communication protocols described above.

Generally, the contactless IC card is configured to correspond to one of the above communication protocols. The communication protocol used by the IC card is fixed at the time of issuance of the IC card. Therefore, there occurs a problem that the user must posses a plurality of IC cards in order to cope with the respective communication protocols.

According to one embodiment of the invention, an object is to provide a mobile electronic device that can further enhance the convenience for the user and a control method of the mobile electronic device.

According to one embodiment of the invention, there is provided a mobile electronic device that transmits and receives data with respect to an external device by wireless communication and includes a power source unit configured to receive electric power from the external device by wireless and supply electric power to respective portions of the mobile electronic device, a transmission/reception unit configured to transmit and receive data with respect to the external device, a plurality of signal processor units (243) configured to signal process according to different communication protocols to the data transmitted and received by the transmission/reception unit, a determination unit configured to determine a communication protocol based on data received by the transmission/reception unit, a selection unit configured to select one of the plurality of signal processor units based on a determination result of the determination unit, and a control unit configured to perform a control operation to cause the transmission/reception unit to transmit and receive data by use of the signal processor unit selected by the selection unit.

Further, according to another embodiment of the invention, there is provided a control method of a mobile electronic device that includes a plurality of signal processor units configured to perform signal processes according to different communication protocols in which data is transmitted and received with respect to an external device by wireless communication, including determining a communication protocol based on data received from the external device, selecting one of the plurality of signal processor units based on a determination result, and performing a control operation to transmit and receive data with respect to the external device by use of the selected signal processor unit.

According to one embodiment of the invention, a mobile electronic device that can further enhance the convenience for the user and a control method of the mobile electronic device can be provided.

The invention can be more fully understood from the following detailed description when taken in conjunction with the accompanying drawings, in which:
FIG. 1 is a block diagram for illustrating an example of the configuration of a mobile electronic device according to one embodiment of this invention and a control method of the mobile electronic device.
FIG. 2 is a block diagram for illustrating an example of the configuration of an IC card shown in FIG. 1.
FIG. 3 is a block diagram for illustrating an example of the configuration of a communication unit shown in FIG. 2.
FIG. 4 is a flowchart for illustrating a process of the IC card shown in FIG. 2.
FIG. 5 is a flowchart for illustrating another example of the process of the IC card shown in FIG. 2.

Now, a mobile electronic device and a control method of the mobile electronic device according to one embodiment of the invention will be described in detail with reference to the accompanying drawings.

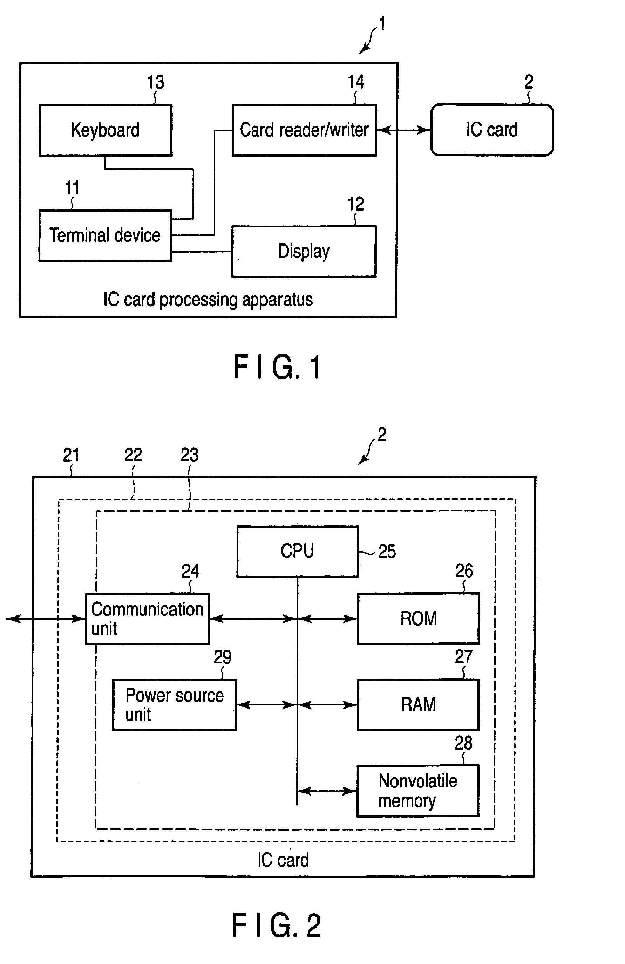

FIG. 1 is a block diagram for illustrating an example of the configuration of a mobile electronic device according to one embodiment of this invention and a control method of the mobile electronic device.

FIG. 1 is a block diagram for illustrating an example of the configuration of an IC card processing apparatus 1 that communicates with an IC card 2 according to this embodiment.

As shown in FIG. 1, the IC card processing apparatus 1 includes a terminal device 11, display 12, keyboard 13, card reader/writer 14 and the like.

The terminal device 11 has a CPU, various memories and various interfaces. The terminal device 11 controls the operation of the whole portion of the IC card processing apparatus 1.

The display 12 displays various information items under the control of the terminal device 11. The keyboard 13 receives an operation by the operator of the IC card processing apparatus 1 as an operation signal.

The card reader/writer 14 is an interface device that communicates with the IC card 2. The card reader/writer 14 performs a power source voltage supply operation, clock supply operation, reset control operation and data transmission/reception operation with respect to the IC card 2.

The terminal device 11 inputs various commands to the IC card 2 via the card reader/writer 14. For example, when receiving a data write command from the card reader/writer 14, the IC card 2 performs a process of writing the received data into a nonvolatile memory.

Further, the terminal device 11 transmits a read command to the IC card 2 to read data from the IC card 2. The terminal device 11 performs various processes based on data received from the IC card 2.

The card reader/writer 14 transmits and receives data with respect to the IC card 2 by wireless communication. For this purpose, the card reader/writer 14 has a signal processor unit, transmission/reception circuit and antenna (not shown).

The signal processor unit encodes, decodes, modulates and demodulates data to be transmitted or received with respect to the IC card 2. The IC card 2 has a plurality of signal processor units corresponding to various communication protocols of, for example, Type A, B, C.

The transmission/reception circuit amplifies data modulated by the modulation circuit and data received by the antenna. The antenna generates a magnetic field according to data to be transmitted and transmits data to the IC card 2. Further, the antenna recognizes data transmitted from the IC card 2 based on an induced current generated by electromagnetic induction. The communicable distance of proximity contactless IC cards classified according to the communication protocols Type A, B, C is approximately 10 cm. The card reader/writer 14 detects an IC card 2 that is present within the communicable distance (communicable range) and performs a process.

In order to detect the IC card 2, the card reader/writer 14 repeatedly transmits a start command (for example, request command, wakeup command or the like) in conformity to the specification of the above communication protocol to a communicable range.

If the IC card 2 is present, a response with respect to the start command from the IC card 2 is returned to the card reader/writer 14. As a result, the card reader/writer 14 detects the IC card 2.

FIG. 2 is a block diagram for illustrating an example of the configuration of the IC card 2 shown in FIG. 1.

As shown in FIG. 2, the IC card 2 has a card-like main body 21 and an IC module 22 contained in the main body 21. The IC module 22 has one or a plurality of IC chips 23 and a antenna that is a part of communication unit 24. The IC chip 23 and the antenna are connected together and formed in the IC module 22.

The IC chip 23 includes a communication unit 24, CPU 25, ROM 26, RAM 27, nonvolatile memory 28 and power source unit 29.

The communication unit 24 is an interface that makes contactless communication with respect to the card reader/writer 14 of the IC card processing apparatus 1. The communication unit 24 functions as a transmission/reception unit.

For example, the communication unit 24 has the antenna that makes contactless communication with respect to the card reader/writer 14 of the IC card processing apparatus 1. Further, the communication unit 24 includes a transmission/reception circuit that amplifies transmission/reception data, demodulation circuits corresponding to respective communication protocols and a modulation circuit. The configuration of the communication unit 24 will be explained in detail later.

The CPU 25 functions as a control unit that controls the whole portion of the IC card 2. The CPU 25 performs various processes based on control data and control programs stored in the ROM 26 or nonvolatile memory 28. For example, it performs various processes according to a command received from the card reader/writer 14 and creates data such as a response as the processing result.

The ROM 26 is a nonvolatile memory that previously stores control programs, control data and the like. The ROM 26 stores control programs, control data and the like at the manufacturing stage and is incorporated into the IC card 2 in this state. That is, the control programs and control data stored in the ROM 26 are previously installed according to the specification of the IC card 2.

The RAM 27 is a volatile memory functioning as a working memory. The RAM 27 temporarily stores data that is now processed by the CPU 25. For example, the RAM 27 temporarily stores data received from the IC card processing apparatus 1 via the communication unit 24. Further, the RAM 27 temporarily stores a program executed by the CPU 25.

For example, the nonvolatile memory 28 is configured by a nonvolatile memory such as an EEPROM or flash ROM in which data can be written and rewritten. The nonvolatile memory 28 stores control programs and various data items according to the operational utility of the IC card 2.

For example, in the nonvolatile memory 28, program files and data files are created. In each created file, control programs and various data items are written. The CPU 25 realizes various processes by executing the program stored in the nonvolatile memory 28 or ROM 26.

The power source unit 29 receives radio waves from the card reader/writer 14 and generates electromotive force and an operation clock. The power source unit 29 supplies the generated electric power and operation clock to various portions of the IC card 2. When supplied with the electric power, each portion of the IC card 2 is set into an operable state. A case wherein the operation clock is generated by the power source unit 29 is explained, but the clock may be supplied from the exterior. Further, a clock generation unit that generates a clock can be provided separately from the power source unit 29.

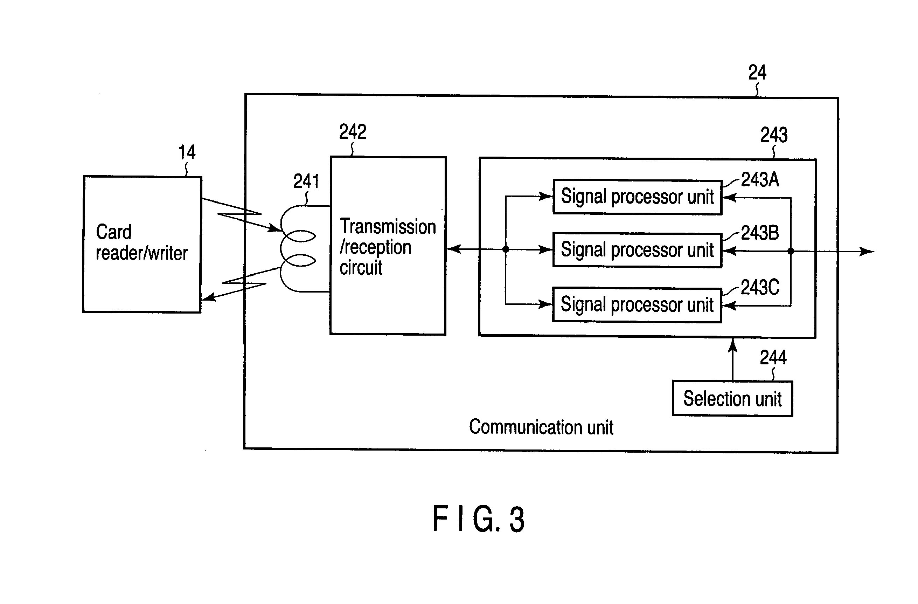

FIG. 3 is a block diagram for illustrating an example of the configuration of the communication unit 24 shown in FIG. 2.

As shown in FIG. 3, the communication unit 24 has an antenna 241, transmission/reception circuit 242, signal processor unit 243 and selection unit 244.

The antenna 241 is configured by a coil, for example. The antenna 241 transmits and receives data with respect to the antenna of the card reader/writer 14.

The transmission/reception circuit 242 amplifies data. The transmission/reception circuit 242 is connected to the antenna 241. The transmission/reception circuit 242 amplifies data received from the card reader/writer 14 and data transmitted to the card reader/writer 14.

The signal processor unit 243 encodes, decodes, modulates and demodulates data to be transmitted or received with respect to the card reader/writer 14.
The encoding systems and modulation systems of the respective communication protocols are different. The IC card 2 includes a plurality of signal processor units 243A to 243C corresponding to the respective communication protocols of Type A, B, C.

The signal processor unit 243A is a signal processor unit corresponding to the communication protocol of Type A. The modulation system of Type A is an Amplitude Shift Keying (ASK) 100% modulation system. Further, the encoding system of Type A is Modified Miller.

The signal processor unit 243B is a signal processor unit corresponding to the communication protocol of Type B. The modulation system of Type B is an ASK 10% modulation system. Further, the encoding system of Type B is Non Return to Zero (NRZ).

The signal processor unit 243C is a signal processor unit corresponding to the communication protocol of Type C. The modulation system of Type C is an ASK 10% modulation system. Further, the encoding system of Type C is Manchester.

The signal processor unit 243 performs a process for data to be transmitted or received by the signal processor unit corresponding to the communication protocol of the received start command.

The selection unit 244 selects a signal processor unit that is used in the process of data to be transmitted or received from the signal processor units 243A to 243C. The selection unit 244 selects the signal processor unit under the control of the CPU 25.

The CPU 25 determines a communication protocol used for communication based on the received start command. For example, the CPU 25 determines a communication protocol based on the format of the received command. That is, the CPU 25 functions as a determination unit. The CPU 25 may be configured to determine a communication protocol based on flag information relating to the communication protocol of a communication object, that is, a transmission-side device.

When determining the communication protocol, the CPU 25 stores information (protocol information) indicating the thus determined communication protocol into the RAM 27. The selection unit 244 selects the signal processor unit used for processing data to be transmitted or received based on information stored in the RAM 27.

The CPU 25 performs the process according to the received command, creates response data and supplies the same to the communication unit 24. The communication unit 24 encodes and modulates the response data by use of the selected signal processor unit and transmits the result to the card reader/writer 14 by use of the antenna 241.

When receiving data of a communication protocol different from the communication protocol indicated by protocol information stored in the RAM 27 while the protocol information is stored in the RAM 27, the IC card 2 transmits an error as a response. Further, the contents stored in the RAM 27 are reset when supply of electric power from the power source unit 29 is interrupted. In this case, protocol information can be rewritten when electric power is supplied again. That is, the process of rewriting protocol information stored in the RAM 27 is substantially limited in a state in which electric power from the power source unit 29 is being supplied thereto.

With the above configuration, the IC card 2 performs a process by always using the same communication protocol while the IC card 2 lies within a communicable range of the card reader/writer 14.
That is, when the IC card 2 first receives a command, it determines a communication protocol used thereafter based on the first received command.

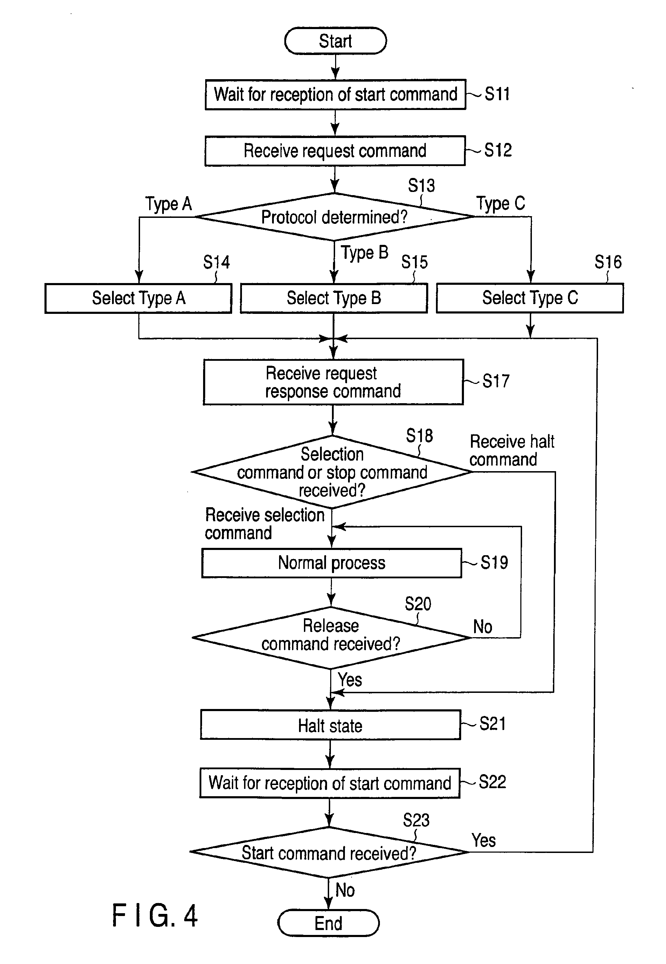

FIG. 4 is a flowchart for illustrating a process of the IC card 2 shown in FIG. 2.

When the IC card 2 receives a magnetic field from the card reader/writer 14 and generates electromotive force, it is set into a state to wait for reception of a start command (request command) (step S11). In this state, if the IC card 2 receives the request command (step S12), the CPU 25 of the IC card 2 determines a communication protocol (step S13). Further, the CPU 25 stores information (protocol information) indicating the thus determined communication protocol into the RAM 27. The RAM 27 functions as a storage unit of protocol information.

If the communication protocol is Type A, the selection unit 244 selects the signal processor unit 243A corresponding to the communication protocol of Type A (step S14). If the communication protocol is Type B, the selection unit 244 selects the signal processor unit 243B corresponding to the communication protocol of Type B (step S15). If the communication protocol is Type C, the selection unit 244 selects the signal processor unit 243C corresponding to the communication protocol of Type C (step S16).

The CPU 25 creates a request response command in response to a request command. For example, the request response command contains an identifier, application data and protocol information. The communication unit 24 subjects the request response command to a signal process by using the signal processor unit selected by the selection unit 244 and transmits the processing result to the card reader/writer 14 (step S17).

The IC card 2 is set into a state to wait for reception of a selection command or halt command (step S18). In step S18, when the IC card 2 receives the selection command, it performs a normal process (step S19). That is, when the CPU 25 receives a command from the card reader/writer 14 in this state, it performs a process corresponding to the received command and transmits a response to the card reader.

Further, when the IC card 2 receives a release command (step S20) in a state in which a channel is established, it releases the channel and is set into a halt state (step S21). That is, when the channel is established, the IC card 2 repeatedly performs a normal process until a release command is received.

Also, if a halt command is received in step S18, the IC card 2 is set into a halt state (step S21).

If the IC card 2 is set into the halt state, it is set into a state to wait for reception of a start command (wakeup command) again (step S22).

In step S22, if the IC card 2 receives a start command (YES in step S23), it performs a process of step S17. Thus, a process is performed by always using the same communication protocol while the IC card 2 lies within the communicable range of the card reader/writer 14.

According to the above embodiment, the IC card 2 includes a plurality of signal processor units corresponding to the respective communication protocols. The IC card 2 determines a communication protocol used in data received based on the first received command. The IC card 2 selects the signal processor unit used for the process based on the thus determined communication protocol. As a result, a single IC card can be used to cope with a plurality of communication protocols.

That is, according to this embodiment, communication protocols can be freely selected when the user utilizes the card without fixedly setting the communication protocol at the manufacturing stage and card issuing stage. As a result, a mobile electronic device that can further enhance the convenience of the user and a control method of the mobile electronic device can be provided.

This invention is not limited to the embodiment described above. In the above embodiment, the configuration in which the process is performed by always using the same communication protocol while the IC card 2 lies within the communicable range of the card reader/writer 14 is explained. However, this invention is not limited to this configuration. For example, the configuration can be formed to selectively switch communication protocols in a preset stage in the course of the process.

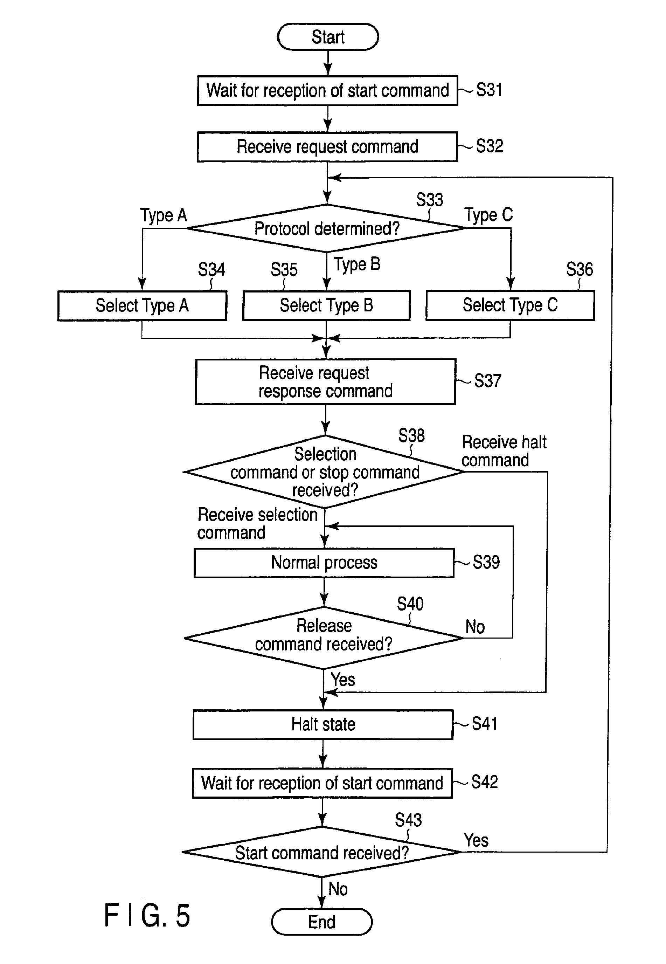

FIG. 5 is a flowchart for illustrating another example of the process of the IC card 2 shown in FIG. 2. Steps S31 to S43 shown in FIG. 5 are the same as steps S11 to S23 shown in FIG. 4. The operation of the IC card 2 shown in FIG. 5 is different in a process transition made when a start command is received in the halt state.

That is, when a halt command is received in step S38 or when a release command is received in step S40, the CPU 25 of the IC card 2 is set into a halt state (step S41).

When the IC card 2 is set into the halt state, it is set into a state to wait for reception of a start command (request command or wakeup command) again (step S42).

When the CPU 25 receives a start command (YES in step S43) in step S42, it performs a process of step S33. The CPU 25 determines a communication protocol based on the received command (step S33). Further, the CPU 25 rewrites protocol information already stored in the RAM 27. That is, the CPU 25 stores information indicating a communication protocol of the command received in the halt state into the RAM 27.

In this case, the operation of a specified application is performed and then another application of another communication protocol can be successively executed. That is, when the process of another communication protocol is performed, it becomes unnecessary to turn OFF the IC card 2. As a result, it becomes possible to further enhance the convenience of the user.

In addition, the communication protocols can be set in correspondence to applications. Generally, applications are stored in the nonvolatile memory 28. In this case, the nonvolatile memory 28 functions as a storage unit that stores a plurality of applications and management information items of the respective applications.

For example, an operational condition is added to management information of applications stored in the nonvolatile memory 28. Information, for example, "selection time of communication protocol Type A", "selection time of communication protocol Type B" or the like is added to the above operational condition.

When information of "selection time of communication protocol Type A" is added to the operational condition of the management information of the application A, for example, the CPU 25 determines whether or not protocol information indicating Type A is stored in the RAM 27 at the execution time of the application A. The CPU 25 executes the application A only when protocol information indicating Type A is stored in the RAM 27.

By the above setting, the applications that can be executed for the respective communication protocols can be limited.

Further, it becomes possible to realize the configuration in which operations are simultaneously performed according to a plurality of communication protocols by allocating channels to the respective communication protocols. For example, when a command of communication protocol Type B is input in a state in which the channel A is allocated to communication protocol Type A, the IC card 2 allocates a channel B to communication protocol Type B.

As a result, for example, the IC card 2 suspends process of the channel A by the arbitrary commands on application. The IC card 2 can execute another application by use of the channel B.

As described above, the IC card 2 performs respective processes in an independent state by setting status information indicating the state of progress of a process and protocol information indicating a selected communication protocol for each channel in the IC card 2. Thus, a mobile electronic device that can further enhance the convenience of the user and a control method of the mobile electronic device can be provided.

In the above embodiment, a case wherein the signal processor unit 243 has the configuration corresponding to the communication protocols of Type A, B, C is explained. However, the configuration is not limited to the above configuration and may be a configuration corresponding to another communication system. In this case, the signal processor unit 243 has a signal processor unit corresponding to still another communication protocol.

## Claims

1. A mobile electronic device that transmits and receives data with respect to an external device by wireless communication, **characterized by** comprising:
a power source unit (29) configured to receive electric power from the external device by wireless and supply electric power to respective portions of the mobile electronic device,
a transmission/reception unit (24) configured to transmit and receive data with respect to the external device,
a plurality of signal processor units (243) configured to signal process according to different communication protocols to the data transmitted and received by the transmission/reception unit,
a determination unit (25) configured to determine a communication protocol based on data received by the transmission/reception unit,
a selection unit (244) configured to select one of the plurality of signal processor units based on a determination result of the determination unit, and
a control unit (25) configured to performs a control operation to cause the transmission/reception unit to transmit and receive data by use of the signal processor unit selected by the selection unit.

2. The mobile electronic device according to claim 1, which further comprises a first storage unit (27) configured to store protocol information indicating a communication protocol determined by the determination unit and **characterized in that** the selection unit determines one of the signal processor units to be selected with reference to protocol information stored in the first storage unit.

3. The mobile electronic device according to claim 2, **characterized in that** the first storage unit limits a process of rewriting protocol information while receiving electric power from the power source unit.

4. The mobile electronic device according to claim 3, **characterized in that** the first storage unit releases the limitation of the process of rewriting protocol information when it is detected that the mobile electronic device is set in a halt state by receiving one of a halt command and release command.

5. The mobile electronic device according to claim 1, which further comprises a second storage unit (28) configured to store a plurality of applications and management information of the respective applications and **characterized in that** the management information stored in the second storage unit includes information that limits an execution process of the application for each communication protocol.

6. The mobile electronic device according to claim 1, **characterized in that** the control unit allocates channels to the respective communication protocols and performs a process for each channel.

7. A control method of a mobile electronic device including a plurality of signal processor units that perform signal processes according to different communication protocols in which data is transmitted and received with respect to an external device by wireless communication, **characterized by** comprising:
determining a communication protocol based on data received from the external device,
selecting one of the plurality of signal processor units based on a determination result, and
performing a control operation to transmit and receive data with respect to the external device by use of the selected signal processor unit.
